# EUROPEAN PATENT SPECIFICATION

(11) **EP 2 340 953 B1**
(45) Date of publication and mention of the grant of the patent: **22.08.2012**
(21) Application number: 10000009.0
(22) Date of filing: 04.01.2010
(51) Int. Cl.: B60K 7/00

(54) **An improved in-wheel motor structure**
Verbesserte In-Wheel-Motorstruktur
Structure de moteur-roue améliorée

(43) Date of publication of application: 06.07.2011
(73) Proprietor: Motive Power Industry Co., Ltd., Dacun Township, Changhua County 515 (TW)
(72) Inventor: Ze-Chun, Chen, Taitung City Taitung County 950 (TW)
(74) Representative: Statti, Francesco

(56) References cited:
- EP-A1- 1 109 298
- FR-A1- 2 875 184
- US-A1- 2007 188 125
- US-A1- 2008 023 237

## Description

### Field of the invention

The present invention relates to an in-wheel motor structure, and more particularly to an improved in-wheel motor structure that uses the hybrid electric vehicle (HEV) to drive a wheel.

### Background of the invention

The hybrid electric vehicle (HEV) combines a conventional internal combusting engine propulsion system with an electric propulsion system. When car initiates, the engine speed is very lower that the rotation driving is insufficient. Therefore, the car is normally relied on electrical motor to provide the supplemental electrical power for the engine. When the rotation speed of the engine is fast enough, the supplemental electrical power of the electrical motor is stop to supply and the car is driven solely by the engine in order to reduce the consumption of the fuel and decrease on the cost so that the high performance and low cost demand can be achieved in the modern vehicle. The increasing in oil price in recent years plus the change in the climate, countries around the world are working together to combat the environmental issues. High performance and environmental friendly vehicles are increasing important in the globe markets.

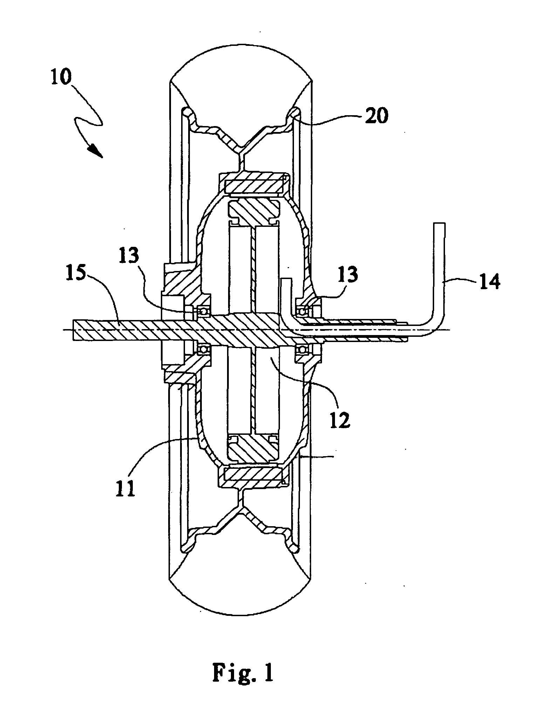

Fig. 1 shows a schematic view of a conventional design of in-wheel motor structure, the in-wheel motor (10) comprises a wheel frame (20) assembly integrally with a rotor (11) and a stator (12), wherein a plurality of bearings (13) are located between the inner side of the rotor (11) and the central axis (15) of the stator (12) so that a control cable (14) is assembled and penetrated through to the central axis (15) of the stator (12) in order to provide the electrical power required for rotating the rotor (11) and the wheel frame (20) so the electrical power car can be moved.

This type of in-wheel motor (10) for the hybrid electric vehicle (HEV) is normally installed at the front wheel of the car not the rear wheel because the space is taken by the engine and transmission box. As a result, the conventional in-wheel motor (10) cannot be installed at rear wheel of the vehicle. However, for the vehicle to use the front wheel for the electrical driving and the rear wheel for the combusting engine propulsion system, the complexity of the vehicle is difficult regulated by legal testing and the front wheel electrical driving can cause the user difficult to handle the vehicle comfortably.

An in wheel motor structure according to the preamble of claim 1 is known from EP-A-1 109 298.

### Summary of the invention

In view of the foregoing shortcomings of the conventional designs, the present invention provides an improved in-wheel motor used for HEV car.

The improved in-wheel motor structure of the present invention comprises a stator, integrating to a car frame fixing arm as one unit; a rotor, assembling with a wheel frame of the wheel as one unit; a shaft, integrating with the rotor as one unit, wherein the shaft and rotor is then connected to an engine driving shaft via a transmission unit integrally; and a plurality of bearings, locating between an inner side of the stator and the shaft of the rotor so that the rotor is rotated by using the stator as a central point of rotation. The stator is assembled integrally with the car frame fixing arm as one unit. According to one of preferred embodiments of the present invention, the wheel is a rear wheel and the car frame fixing arm is a rear-wheel frame fixing arm. The improved in-wheel motor structure is designed in such that when the speed of the car is higher than a pre-determined value, the transmission unit will be integrated with the engine driving shaft as one unit.

These features and advantages of the present invention will become more fully apparent from the following description and appended claims, or may be learned by the practice of the invention as set forth thereinafter.

### Brief description of the drawings

In order for the advantages of the invention to be readily understood, a more particular description of the invention briefly described above will be rendered by reference to specific embodiments that are illustrated in the appended drawings. Understanding that theses drawings depict only typical embodiments of the invention and are not therefore to be considered to be limiting of its scope, the invention will be described and explained with additional specificity and detail through the use of the accompanying drawings, in which:

Fig. 1 is a perspective view of a conventional structure using for a HEV motor; and

Fig. 2 is a perspective view of an improved in-wheel motor in accordance with a preferred embodiment of the present invention.

### Detailed description of the preferred embodiments

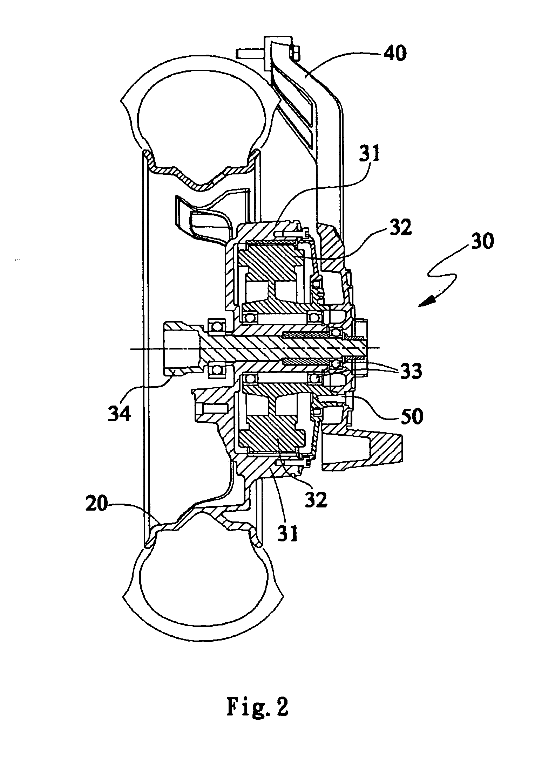

Refer to Fig. 2, a schematic view of an improved HEV motor in accordance with a preferred embodiment of the present invention. The improved in-wheel motor (30) of the present invention is used to drive a wheel and can work with the engine of the car to drive the wheels of the car. For HEV automobile, the in-wheel motor (30) can drive the front wheels or the rear wheels wherein the in-wheel motor (30) comprises a stator (32) and a rotor (31) and a plurality of bearings (33) and a shaft (34). The stator (32) is assembled integrally with a car frame fixing arm (40) of the car via a plurality of fixed units (50) (such as, screws or rivets) as one body. The car frame fixing arm (40) can be used for the front part or the rear part of the car to position the stator (32) at its location inside the car. The rotor (31) and a wheel frame (20) of the car are integrally assembled so that when the rotor (31) is rotating during driving, the wheel frame (20) will be driven to rotate. The shaft (34) and the rotor (31) are integrated together, and the assembly of the shaft (34) and the rotor (31) is then connected to an engine driving shaft (70) via a transmission unit (60) integrally. The bearings (33) are located between the inner side of the stator (32) and the shaft (34) of the rotor (31) so that the stator (32) is utilized as a central point of rotation of the rotor (31), therefore, when rotor (31) is rotated by utilizing the stator (32) as the central point, the rotor (31) will not come in contact with the stator (32) so that the energy consumption is drastically reduced. The stator (32) is coupled to a control cable (not shown) in order to control the required electrical power of the rotation movement for the rotor (31).

When the speed of the car is lower than a pre-determined valve (such as 40km/h), the engine will utilize the control cable to transmit the electrical power as the driving power source for power efficiency. The rotor (31) of the in-wheel motor (30) of the car is driven by the electrical power to rotate shaft (34) and the wheel frame (20) during the driving. When the speed of the car is higher than the pre-determined value, the car will switch to the engine power as the driving power source for car. In such case, a transmission unit will be integrated with the engine driving shaft and the shaft (34) to rotate the shaft (34) via the engine driving shaft in order for the car to move. The engine of the car utilizes the transmission unit and the engine driving shaft to rotate the shaft (34) so that the rotor (31) and the wheel frame (20) will be rotated by the shaft (34). The in-wheel motor drives the wheel frame (20) via the rotor (31). Therefore, the improved in-wheel motor (30) can utilize the hybrid electric power to drive a wheel.

According to one of preferred embodiments of the present invention, the car frame fixing arm (40) is utilized as a rear-wheel frame fixing arm, the in-wheel motor (30) of the present invention is then located at the rear side of the car. Thus, the car is driving by the rear wheels of the car. The user does not need to re-adjust the driving feeling. Since the improved in-wheel motor is designed according to the vehicle regulations, therefore, the car can be driven easily without any of the drawback of the conventional design.

## Claims

1. An improved in-wheel motor structure, used for driving a wheel, comprising:
a stator (33) assembled integrally to a car frame fixing arm (40) as one unit;
a rotor (31) assembling with a wheel frame (20) of the wheel as one unit;
a shaft (34) integrating with the rotor (31) as one unit, **characterized in that** the shaft (34) and the rotor (31) is connected to an engine driving shaft via a transmission unit integrally; and
a plurality of bearings (33) located between an inner side of the stator (32) and the shaft (34) of the rotor (31) so that the roton (31) is rotated by using the stator (32) as a central point of rotation.

2. The in-wheel motor structure of claim 1, wherein the wheel is a rear wheel and the car frame fixing arm (40) is a rear-wheel frame fixing arm.

3. The in-wheel motor structure of claim 1, when the speed of the car is higher than a pre-determined value, the transmission unit will be integrated with the engine driving shaft as one unit to rotate the shaft (34).

## Patentansprüche

1. Eine verbesserte In-Wheel-Motorstruktrur zum Antrieb eines Rades, enthaltend:
einen Stator (32), als Einheit mit einem Autogestell-Befestigungsarm (40) vollkommen zusammengefügt;
einen Rotor (31), als Einheit mit einem Radgestell (20) des Rades zusammengefügt;
eine Welle (34), mit dem Rotor (31) als eine Einheit integriert, **dadurch gekennzeichnet, dass** die Welle (34) und der Rotor (31) über eine Getriebe-Einheit mit einer Motorantriebswelle vollkommen verbunden sind; und
eine Vielzahl von Lagern (33), zwischen der Innenseite des Stators (32) und der Welle (34) des Rotors (31) angelegt, damit der Rotor (31) durch Anwendung des Stators (32) als zentraler Rotationspunkt gedreht wird.

2. Die In-Wheel-Motorstruktur aus Anspruch 1, wobei das Rad ein Hinterrad ist und der Befestigungsarm des Autogestells (40) ein Befestigungsarm für Hinterräder ist.

3. Die In-Wheel-Motorstruktur aus Anspruch 1, wenn die Wagengeschwindigkeit über einem festgelegten Wert liegt, die Getriebe-Einheit wird mit der Motorantriebswelle als eine Einheit zur Drehung der Welle (34) integriert.

## Revendications

1. une structure de moteur-roue améliorée utilisée pour entraîner la roue. Cette structure est équipée:
d'un stator (32) qui est assemblé de manière intégrée dans un bras de fixation d'un châssis de voiture (40) formant une seule unité,
d'un rotor (31) qui s'assemble avec un cadre de roue (20) de la roue formant une seule unité,
d'un arbre (34) qui est intégré dans le rotor (31) formant une seule unité, **caractérisé en ce que** l'arbre (34) et le rotor (31) sont raccordés à un arbre de transmission du moteur par une unité de transmission, et
de plusieurs paliers (33) situés entre un arbre interne du stator (32) et l'arbre (34) du rotor (31) de sorte que le rotor (31) soit entraîné en utilisant le stator (32) comme point central de rotation.

2. La structure de moteur-roue de la revendication 1, dans laquelle la roue est une roue arrière et le bras de fixation du châssis de voiture (40) est un bras de fixation du cadre de roue arrière.

3. La structure du moteur-roue de la revendication 1, dans laquelle, lorsque la vitesse de la voiture est supérieure à une valeur pré-déterminée, l'unité de transmission sera intégrée dans l'arbre de transmission du moteur en tant qu'une seule unité pour entraîner l'arbre (34).
